# EUROPEAN PATENT APPLICATION

(11) **EP 2 711 113 A2**
(43) Date of publication of application: **26.03.2014**
(21) Application number: 13185416.8
(22) Date of filing: 20.09.2013
(51) Int. Cl.: B23B 51/00

(54) **Undercut tool assembly**

(30) Priority: 20.09.2012 CA 2790948
(71) Applicant: Cousineau, Robert, Ottawa, Ontario K1G 3H8 (CA)
(72) Inventor: Cousineau, Robert, Ottawa, Ontario K1G 3H8 (CA)
(74) Representative: Sadler, Peter Frederick

(57) **Abstract**

An undercut tool assembly utilizing a seismic drilling bit designed for insertion for use in enlarging an upper end of a pre-drilled hole for receiving and securely retaining an anchor therein. The bit is mounted onto a drill and has a pivot ring which permits limited tilting movement of the bit body during a drilling process to enlarge the lowermost end of the drill hole. The undercut tool assembly can be used in conjunction and locked engagement with a setting tool in a process to position an anchor in position within the bore hole. In this manner, an anchor can be inserted within the pre-drilled hole, and, when the anchor has been flanged outwardly by conventional means within the hole, the flange portions of the anchor will rest within the enlarged area, thus securely retaining the anchor in place.

## Description

The present invention relates to an undercut tool assembly meant to be used for the insertion and setting of anchors, such as drop-in and wedge type anchors, and, more particularly, the present invention relates to an undercut tool assembly for the insertion and setting of anchors into brittle materials such as concrete, stone, masonry and cementuous materials.

### BACKGROUND OF THE INVENTION

Anchors are conventionally used in construction to attach various components of a building construction to an overhead ceiling or other structure. Such components to be attached can relate to, for example, services that provide plumbing, electrical, drainage, sprinkler system piping and drop ceilings. From these anchors, which are usually of the wedge or drop-in type variety, all of the above services and ceilings are suspended or secured.

Conventionally, in setting anchors in concrete to suspend an awning, for example, a hole is pre-drilled in the surface to which the anchor is to be applied, and then the anchor is inserted into the pre-drilled hole. However, when setting such anchors in concrete it is not uncommon for such anchors to weaken and loosen over time, particularly in situations where cracking or chipping of the concrete around the pre-drilled hole has occurred.

Furthermore, studies have revealed that cracking can typically occur in the concrete element, and that such cracks can significantly impact the performance of anchors. Cracks can originate on a concrete beam or slab in a variety of ways, such as creep, temperature settlement of the support or foundation, thermal expansion and contraction stress overload, or from a natural disaster such as an earthquake or flood. In such situations, the situation can arise where, if one such concrete anchor fails and lets go, the remaining anchors, by virtue of the weight they additionally assume in light of such failure, can also similarly collapse and fail.

It has been found that enlarging the lower part of the pre-drilled hole can allow for the use of anchors in a more secure manner. It has further been found that providing a drill hole with an enlarged lower end can be advantageously provided by a drill bit having an enlarged cutting portion adjacent the tip, which is inserted into the drilled hole, whereby the enlargement of the cutting portion is configured so that it can pass through the shaft of the drilled hole to the lower end to be enlarged.

It would therefore be advantageous to have an improved undercut tool assembly utilizing a seismic drilling bit meant for use in a pre-drilled hole for the insertion and setting of anchors into brittle materials such as concrete, stone, masonry and cementuous materials. It would also be advantageous to have a seismic drilling bit with side cutters on the bit head, when creating an undercut or tilting at the bottom of the borehole, to create an undercut after the drilling has occurred, as these added carbide cutters can extend the life of the drilling bit to reduce the friction and wear that conventional drilling bits would be exposed to.

It would be further advantageous to have an improved undercut tool assembly for use in a one step process for both creating a drill hole and, at the same time, enlarging a lowermost end of a drill hole, wherein an anchor can later be positioned and securely retained within the enlarged area.

It would be further advantageous to have an improved undercut tool assembly having an abutment portion with protective friction inserts to extend the life of the drill bit, and which can be used in conjunction with a setting tool in a process to position an anchor in position within the bore hole.

It would also be further advantageous to have an improved seismic drilling bit meant to be used for the later insertion and setting of anchors which utilizes a pivot ring for coming into contact with a surface being drilled and thus restricting downward movement of the seismic drill bit within the drill hole, the pivot ring having an outermost diameter greater than that of the drill hole and a remainder of the drill bit, whereby the pivot ring permits tilting movement of the bit body during a drilling process to enlarge the lowermost end of the drill hole. To this end, the present invention effectively addresses this need.

### SUMMARY OF THE INVENTION

The present invention provides for an undercut tool assembly for effecting a drill hole and enlarging a lowermost end thereof for a later insertion and setting of anchors therein.

In a first aspect, the present embodiment provides an undercut tool assembly for effecting a drill hole and enlarging a lowermost end thereof for a later insertion and setting of anchors therein, the assembly comprising: a substantially cylindrical seismic drill bit sized to fit into the drill hole, the seismic drill bit having a upper end constructed and arranged to be operatively connected to a drill and a lower end having a drill tip head disposed generally opposite said upper end, wherein at least one cutting portion is positioned to protrude from the drill tip head, the at least one cutting portion having an operational cutting radius greater than a cutting radius of the seismic drill bit; a pivot ring on the seismic drill bit for coming into contact with a surface being drilled and thus restricting downward movement of the seismic drill bit within the drill hole, the pivot ring having an outermost diameter greater than that of the drill hole and a remainder of the seismic drill bit, whereby the pivot ring permits limited tilting movement of the seismic drill bit during a drilling process to enlarge the lowermost end of the drill hole; an abutment member on the seismic drill bit having a greater width than a remainder of the seismic drill bit; and a setting tool portion constructed and arranged to be operatively connected to the undercut tool assembly, the setting tool portion having a recessed area defined therein on an upper surface thereof for receiving and securing an insertion of the undercut tool assembly therein after the drill hole has been made.

In a second aspect, the present embodiment provides an undercut tool assembly for effecting a drill hole and enlarging a lowermost end thereof for a later insertion and setting of anchors therein, the assembly comprising: a substantially cylindrical seismic drill bit sized to fit into the drill hole, the seismic drill bit having an upper end constructed and arranged to be operatively connected to a drill and a lower end having a drill tip head disposed generally opposite said upper end, wherein at least one cutting portion is positioned to protrude from the drill tip head, the at least one cutting portion having an operational cutting radius greater than a cutting radius of the seismic drill bit; a pivot ring on the seismic drill bit for coming into contact with a surface being drilled and thus restricting downward movement of the seismic drill bit within the drill hole, the pivot ring having an outermost diameter greater than that of the drill hole and a remainder of the seismic drill bit, whereby the pivot ring permits limited tilting movement of the seismic drill bit during a drilling process to enlarge the lowermost end of the drill hole, and wherein the pivot ring further comprises a plurality of recessed areas defined internally thereof, comprising a longitudinally extending first chamber, a laterally extending groove channel and a longitudinally extending second chamber, each of the first chamber and the second chamber being in connection with the groove channel; an abutment member on the seismic drill bit having a greater width than a remainder of the seismic drill bit; and a setting tool portion constructed and arranged to be operatively connected to the undercut tool assembly, the setting tool portion having a recessed area defined therein on an upper surface thereof for receiving and securing an insertion of the undercut tool assembly therein after the drill hole has been made, wherein the upper setting tool portion further comprises a securing tab on an upper interior surface thereof, and wherein the pivot ring further comprises an abutment insert for inhibiting movement of the securing tab beyond the abutment insert, the securing tab being constructed and arranged for placement within and selective slidable movement along the groove channel to achieve either a locked position when the securing tab is abutting the abutment insert and an unlocked position in the first chamber.

### BRIEF DESCRIPTION OF THE DRAWINGS

The embodiments of the present invention will now be described by reference to the following figures, in which identical reference numerals in different figures indicate identical elements and in which:
**Figure 1A** is a front view of an embodiment of the undercut tool assembly of the present invention;
**Figure 1AA** is a front view of an embodiment of the drill tip head of the undercut tool assembly of the present invention;
**Figure 1B** is a side view of the embodiment of the undercut tool assembly of the present invention shown in Figure 1A;
**Figure 2A** is a front view of the undercut tool assembly of the present invention shown in Figures 1A and 1B, in position within a drill hole;
**Figure 2B** is a side view of the setting tool portion which can be interconnected with the undercut tool assembly;
**Figure 2C** is a side view of the undercut tool assembly of the present invention shown in Figure 2A, in position and in an unlocked position, about to interconnected with the setting tool portion;
**Figure 3A** illustrates the undercut tool assembly of the present invention shown in Figure 2C, in position and in an unlocked position with the setting tool portion; and
**Figure 3B** illustrates the undercut tool assembly of the present invention shown in Figure 3A, in a locked position with the setting tool portion.

### DETAILED DESCRIPTION OF THE INVENTION

The invention will be described for the purposes of illustration only in connection with certain embodiments; however, it is to be understood that other objects and advantages of the present invention will be made apparent by the following description of the drawings according to the present invention. While a preferred embodiment is disclosed, this is not intended to be limiting. Rather, the general principles set forth herein are considered to be merely illustrative of the scope of the present invention and it is to be further understood that numerous changes may be made without straying from the scope of the present invention.

The present invention consists of an improved undercut tool assembly utilizing a seismic drilling bit designed for insertion and use in enlarging an upper end of a pre-drilled hole for receiving and securely retaining an anchor therein. The drilling bit can be rotatably mounted onto a conventional drill, or, alternatively, in an alternative embodiment, onto an elongated mounting assembly, which in turn is rotatably mounted to a conventional drill.

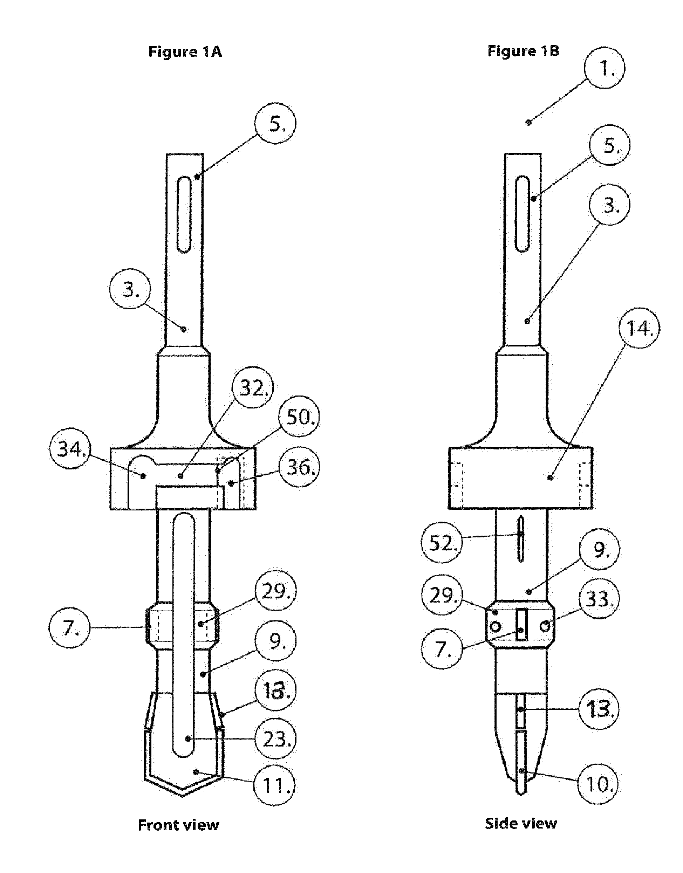

Referring to **Figures 1A** and **1B****,** there is shown an undercut tool assembly (utilizing a seismic drilling bit) shown generally at **1** in accordance with a first exemplary embodiment of the present invention, for use in the later insertion and setting of anchors into concrete, stone, masonry and cementuous materials. In a preferred embodiment, the proximal upper end **5** of the seismic drilling bit **3** is constructed and arranged to be releasably secured to a drill by way of a drill spindle (not shown). In this manner, the bit itself, without any other necessary parts, can be easily attached to a drill to effect the drilling of a drill hole and enlarging a lowermost end thereof, whereby an anchor can be set more securely therein.

Preferably, the seismic drilling bit **3** will be made of a durable, machinable metal and is substantially cylindrical in shape. The seismic drilling bit **3** is, preferably, of a one-piece construction that comprises an upper end **5** and a lower end **9** which are integrally connected to one another. The drilling bit **3** can also have a fluted body, or a non-fluted body.

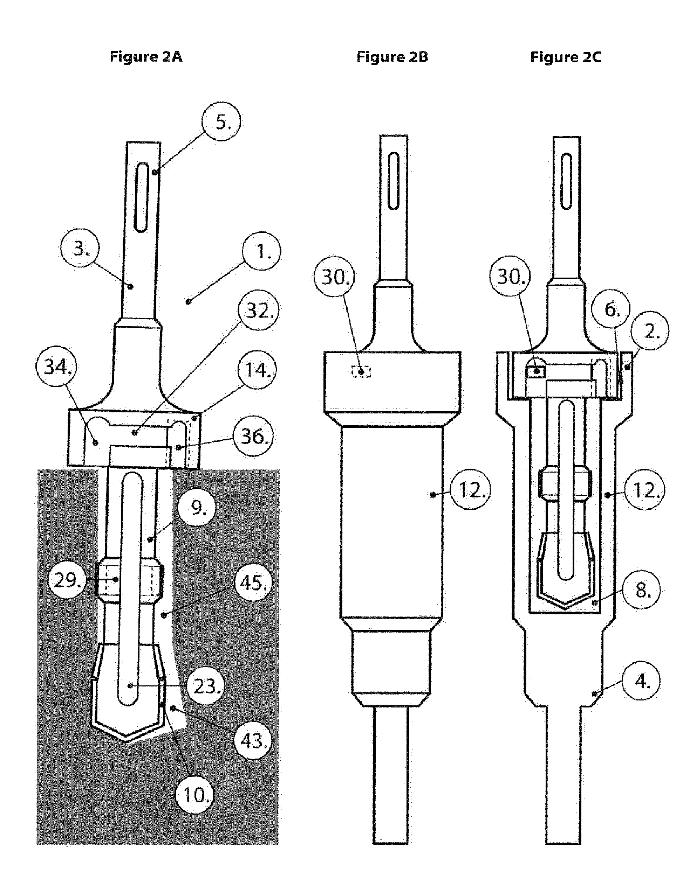

With reference to Figures **1A** and **1B****,** it can be seen that the seismic drilling bit **3** can effect the drilling of a drill hole, and has a first diameter (and cutting radius) sized to readily fit into a drill hole **45,** as shown in **Figures 2A** and **2B**. The bit can, if desired, possess, as most conventional drill bits do, at least one cutting edge (not shown) and at least one groove (not shown) extending in a helical fashion along a length of the seismic drilling bit **3.**

As best shown in **Figures 1A** and **1B****,** the lower end **9** of the seismic drilling bit **3** has a cutting portion **10** positioned on each side of the drill tip head **11** of the lower end **9** of the seismic drilling bit **3,** the cutting portions **10** having a greater outermost width than that of the remainder of the seismic drilling bit **3** whereby, when the seismic drilling bit **3** is inserted fully into a lowermost end **43** of the drill hole **45** and rotated, the cutting portions **10** enlarge a circumference of the drill hole **45** at the lowermost end **43** thereof that is greater than the circumference of the remainder of the shaft of the drill hole **45.** Preferably, the cutting portions are positioned on opposite sides of the lower end **9** of the seismic drilling bit **3,** though it is conceivable that cutting portions **10** could extend outwardly from substantially around an entirety of the lower end **9** of the seismic drilling bit **3.** A plurality of cutting portions **10** could also be utilized. By virtue of the seismic drilling bit **3** having cutting portions **10** (which could be, for example, carbide cutting tips), it provides a second cutting step to widen a lower end **43** of the pre drilled borehole **45.** The lower end **9** of the seismic drilling bit **3** can also comprise wear indicator **52** (shown in **Figure 1B****)** to indicate if the tool is still in a good working condition. If the wear indicator **52** is not apparent, through repetitive use and wear due to frictionality, then the tool should be replaced. More than one wear indicator **52** could be used, if necessary.

In an alternative embodiment, the lower end **9** of the seismic drilling bit **3** could possess a quad cutting portion (not shown), as well as a cutting portion, positioned on each side of the lower end of the seismic drilling bit, the quad cutting portion having a greater outermost width than that of the remainder of the seismic drilling bit.

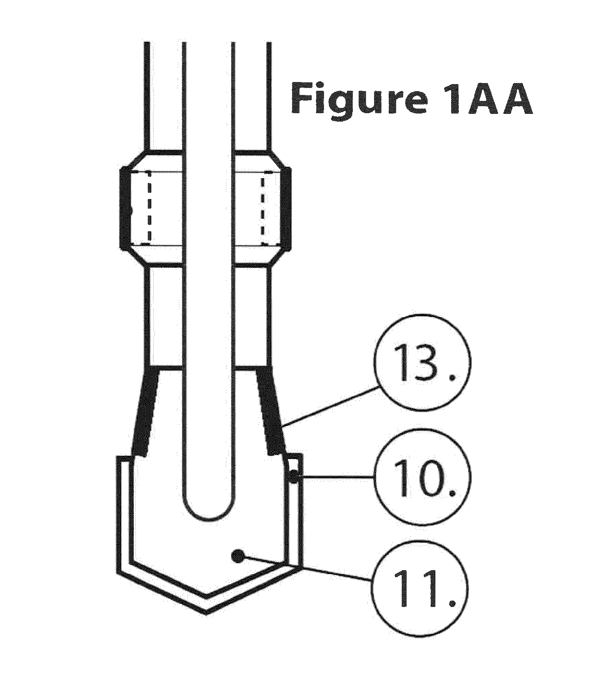

In another alternative embodiment, and with specific reference to **Figure 1AA****,** a wear insert **13** is present, flush with the upper outer face of the drill tip head **11.** Said wear insert **13** can be a protective carbide insert and extends the life of the drill tip head **11** and cutting portions **10** by acting as a reinforcement means for drill tip head **11.**

With reference to **Figures 1A**, **1B** and **2A****,** the seismic drilling bit **3** further comprises a pivot ring **14.** As shown in **Figures 1A** and **1B****,** when the drilling bit is used to effect a drilling hole **45** and is inserted further into the hole **45,** the seismic drilling bit **3 (**see **Figure 2A****)** can only be pushed downwardly to a certain point, at which the pivot ring **14** comes into contact with the surface being drilled, thus restricting further downward movement of the seismic drilling bit **3.** Once the seismic drilling bit **3** is positioned into the hole **45,** the seismic drilling bit **3** and pivot ring **14** can operably be rotated (by the user rotating the drill during the drilling process), as shown in **Figure 2A****,** to provide for wider rotation of the seismic drilling bit **3** inside the hole **45** with a view to enlarging a lowermost end **43** of the drill hole **45** to receive an anchor.

With reference to **Figures 1A**, **1B** and **2A****,** the seismic drilling bit **3** further comprises an abutment portion **29.** In an exemplary embodiment, the abutment portion **29** is positioned beneath the pivot ring **14** on the seismic drilling bit **3,** and substantially lower than the pivot ring **14** while being slightly higher than the lower end **9** of the seismic drilling bit **3.** By virtue of the abutment portion **29,** the degree of rotation of the seismic drilling bit **3** is controlled during the drilling process, as the abutment portion **29** will contact a side wall of the hole **45** if the angle of rotation is too great, thus inhibiting any further rotation of the seismic drilling bit **3.** In an alternative embodiment, the abutment portion **29** could also possess cutting portions **10** having a greater outermost width than that of the remainder of the abutment portion **29** and the seismic drilling bit **3.**

In a further exemplary embodiment, with reference to **Figure 1A** and **1B****,** the abutment portion **29** will have friction protective inserts **7** on a surface thereof to reduce friction between the abutment portion **29** and the side wall of the drill hole **45,** thus extending the life of the tool. These friction protective inserts **7** may surround the abutment portion **29,** or may cover only a portion of it, or may cover partly half an outer surface thereof. The abutment portion **29** can also comprise wear indicators **33** (shown in **Figure 1B** noted as dots) to indicate if the tool is still in a good working condition. If the wear indicators **33** are not apparent, through repetitive use and wear due to frictionality, then the tool should be replaced. In another exemplary embodiment, with reference to **Figure 1A**, the abutment portion **29** does not extend completely around the seismic drilling bit **3.** Rather a dust exit opening **23** is provided on sides of the abutment portion **29,** whereby space is created to allow for drilling dust to exit out the top of the drill hole **45.**

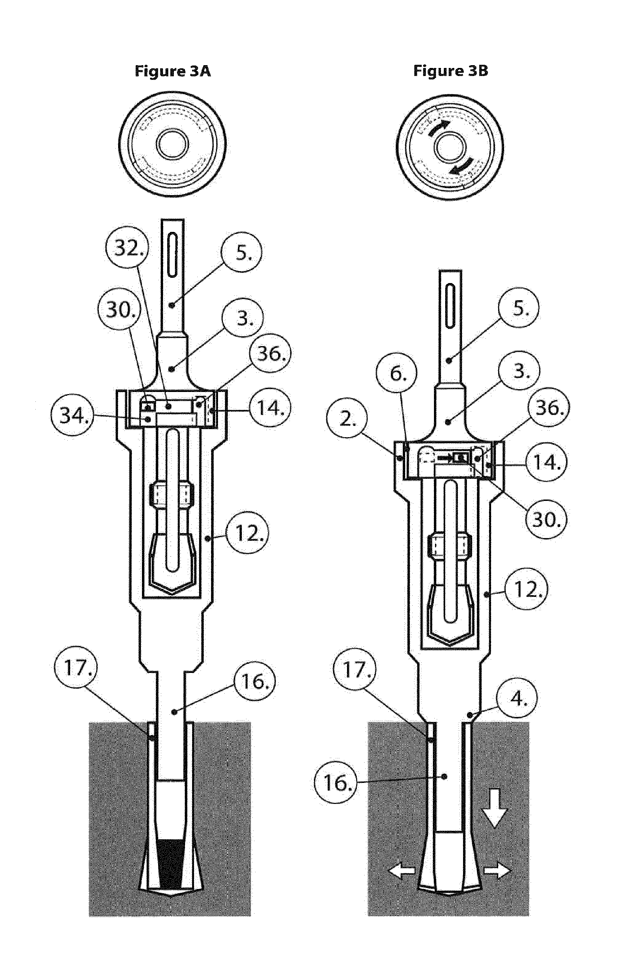

Further, with reference to **Figure 1A** and **2A****,** the pivot ring **14** also preferably has machined within a longitudinally extending first chamber **34,** a longitudinally extending groove channel **32,** and a longitudinally extending second chamber **36,** each of the first chamber **34** and second chamber **36** being in connection with the groove channel, whereby the seismic drilling bit **3** can be inserted into a setting tool portion **12,** as seen in **Figures 2C****,** **3A** and **3B**, and as hereinafter described. A worker skilled in the relevant art would appreciate that an alternative embodiment of the pivot ring **14** could exist, whereby said pivot ring **14** is not comprised of a longitudinally extending first chamber **34,** a longitudinally extending groove channel **32,** and a longitudinally extending second chamber **36.** Instead, the pivot ring **14** could be machined as a one piece unit onto the lower end **9** of the seismic drilling bit **3.** This would eliminate dust that would collect in the aforementioned chambers **34, 36** and channel **32** from the drilling of the drill hole **45.**

With reference to **Figure 2B** and **2C****,** the setting tool portion **12** will also preferably possess a securing tab **30** on an upper interior surface thereof, whereby, after the bore hole **45** has been created by the seismic drilling bit **3,** the seismic drilling bit **3** can be inserted into the setting tool portion **12** for later placement of an anchor as hereinafter described. The setting tool portion **12** will have a substantially hollow upper end, consisting of a first recessed area **6** and a second interconnected recessed area **8,** which are constructed and arranged for receiving the seismic drilling bit **3** therein. With reference to **Figures 2C** and **3B**, the first recessed area **6** of the setting tool portion **12** possesses a greater width than that of the second recessed area **8,** in much the same way an upper rim portion **2** of the setting tool portion **12** possesses a greater width than that of a lower portion **4** thereof. The upper rim portion **2** will surround a first recessed area **6** defined therein for receiving, and in abutment with, the greater width of the pivot ring **14** when the seismic drilling bit **3** is placed therein.

In connecting the seismic drilling bit **3** into the setting tool portion **12,** the securing tab **30** is positioned within the longitudinally extending first chamber **34,** as can be seen in **Figure 3A****,** and, by rotating the seismic drilling bit **3,** the securing tab **30** slidably moves along groove channel **32,** as can be seen in **Figure 3B**. Rubber insert **50,** as seen in **Figure 1A**, is positioned on an upper interior surface of the pivot ring **14,** so as to eventually abut and prevent further sliding movement of securing tab **30** beyond the rubber insert **50,** and to protect the securing tab, from damage when the hammering/vibration type actions securing the anchor are effected. Once the securing tab **30** encounters the rubber insert **50** the device is in a locked position, securing the seismic drilling bit **3** to the setting tool portion **12.** To disengage the seismic drilling bit **3** from the setting tool portion **12,** the seismic drilling bit **3** can be rotated slightly in a counter direction to move the securing tab **30** slidably back along groove channel **32** and into the first chamber **34** to assume an unlocked position, and thus separate these components.

In operation, the seismic drilling bit **3** is to be rotatably mounted and connected onto a drill (not shown) by way of spindle **5,** and the assembly is positioned over a surface where a drill hole is to be made. Once the seismic drilling bit **3** is sunk to a pre-set depth and rotated, rotational drilling (and tilted rotational drilling as previously described) by the seismic drilling bit **3** can then be effected in creating an enlarged area of the lowermost end of a drill hole. By virtue of pivot ring **14** the seismic drilling bit **3 (**see **Figure 2A****)** can only be pushed downwardly to a certain point, at which the pivot ring **14** comes into contact with the surface being drilled, thus restricting further downward movement of the seismic drilling bit **3.** Once the seismic drilling bit **3** is fully positioned into the hole **45,** the seismic drilling bit **3** and pivot ring **14** can then operably be rotated (by the user rotating the drill during the drilling process), the pivot ring controlling the amount of rotational tilting during the drilling process, as shown in **Figure 2A****,** and providing for a greater range of rotation of the seismic drilling bit **3** inside the hole **45** with a view to enlarging a lowermost end **43** of the drill hole **45.** It will also be understood that a shape of the pivot ring **14** could also be varied.

Of course, by virtue of the drill tip head **11** (or the quad cutting portion if utilized) having a greater outermost width (and operational cutting radius) than that of the seismic drilling bit **3,** when the seismic drilling bit **3** is rotated, enlarges a circumference of the drill hole **45** at the lowermost end **43** (in creating the enlarged area). In this manner, once the enlarged area has been created, and the seismic drilling bit **3** removed from the drill hole, the anchor (not shown) can be inserted, and, when the anchors have been flanged outwardly by conventional means within the drill hole, the flange portions of the anchor can rest within the enlarged area, thus securely retaining the anchor in place.

Once the drill hole **45** has been created, the seismic drilling bit **3** is inserted into the setting tool portion **12,** as previously described, and an anchor **17** is attached to an outmost end **16** of the setting tool portion **12,** as shown in **Figures 3A** and **3B**, whereby the proximal upper end **5** of the seismic drilling bit **3** is secured to a drill and then used to rotate and pull the interconnected seismic drill bit **3** and setting tool portion **12** upwardly within the drill hole **45,** which forces the flange portions of anchor **17** outwardly, to secure into the undercut within drill hole **45,** as shown in **Figure 3B**, thus securely retaining the anchor **17** in place.

It will be apparent to those skilled in this art that various modifications and variations may be made to the embodiments disclosed herein, consistent with the present invention, without departing from the spirit and scope of the present invention.

Other embodiments consistent with the present invention will become apparent from consideration of the specification and the practice of the invention disclosed therein.

Accordingly, the specification and the embodiments are to be considered exemplary only, with a true scope and spirit of the invention being disclosed by the following claims.

## Claims

1. An undercut tool assembly for effecting a drill hole and enlarging a lowermost end thereof for a later insertion and setting of anchors therein, the assembly comprising:
a substantially cylindrical seismic drill bit sized to fit into the drill hole, the seismic drill bit having a upper end constructed and arranged to be operatively connected to a drill and a lower end having a drill tip head disposed generally opposite said upper end, wherein at least one cutting portion is positioned to protrude from the drill tip head, the at least one cutting portion having an operational cutting radius greater than a cutting radius of the seismic drill bit;
a pivot ring on the seismic drill bit for coming into contact with a surface being drilled and thus restricting downward movement of the seismic drill bit within the drill hole, the pivot ring having an outermost diameter greater than that of the drill hole and a remainder of the seismic drill bit, whereby the pivot ring permits limited tilting movement of the seismic drill bit during a drilling process to enlarge the lowermost end of the drill hole;
an abutment member on the seismic drill bit having a greater width than a remainder of the seismic drill bit; and
a setting tool portion constructed and arranged to be operatively connected to the undercut tool assembly, the setting tool portion having a recessed area defined therein on an upper surface thereof for receiving and securing an insertion of the undercut tool assembly therein after the drill hole has been made.

2. The undercut tool assembly as claimed in claim 1, wherein the drill tip head extends outwardly from substantially around an entirety of the lower end.

3. The undercut tool assembly as claimed in claim 1 or 2, wherein the drill tip head is positioned to protrude from the lower end, the drill tip head having an operational cutting radius greater than a cutting radius of the seismic drill bit.

4. The undercut tool assembly as claimed in any preceding claim, wherein the seismic drill bit is of a one-piece construction.

5. The undercut tool assembly as claimed in any preceding claim, wherein the lower end possesses a plurality of cutting regions.

6. The undercut tool assembly as claimed in any preceding claim, wherein the abutment portion is positioned beneath the pivot ring on the seismic drill bit.

7. The undercut tool assembly as claimed in any preceding claim, wherein the abutment portion is positioned substantially lower than the pivot ring and slightly above the lower end of the seismic drill bit.

8. The undercut tool assembly as claimed in any preceding claim, wherein the abutment portion further comprises wear indicators thereon.

9. The undercut tool assembly as claimed in any preceding claim, wherein the abutment portion further comprises friction protective inserts on a surface thereof to reduce friction between the abutment portion and side walls of the drill hole.

10. An undercut tool assembly for effecting a drill hole and enlarging a lowermost end thereof for a later insertion and setting of anchors therein, the assembly comprising:
a substantially cylindrical seismic drill bit sized to fit into the drill hole, the seismic drill bit having an upper end constructed and arranged to be operatively connected to a drill and a lower end having a drill tip head disposed generally opposite said upper end, wherein at least one cutting portion is positioned to protrude from the drill tip head, the at least one cutting portion having an operational cutting radius greater than a cutting radius of the seismic drill bit;
a pivot ring on the seismic drill bit for coming into contact with a surface being drilled and thus restricting downward movement of the seismic drill bit within the drill hole, the pivot ring having an outermost diameter greater than that of the drill hole and a remainder of the seismic drill bit, whereby the pivot ring permits limited tilting movement of the seismic drill bit during a drilling process to enlarge the lowermost end of the drill hole, and wherein the pivot ring further comprises a plurality of recessed areas defined internally thereof, comprising a longitudinally extending first chamber, a laterally extending groove channel and a longitudinally extending second chamber, each of the first chamber and the second chamber being in connection with the groove channel;
an abutment member on the seismic drill bit having a greater width than a remainder of the seismic drill bit; and
a setting tool portion constructed and arranged to be operatively connected to the undercut tool assembly, the setting tool portion having a recessed area defined therein on an upper surface thereof for receiving and securing an insertion of the undercut tool assembly therein after the drill hole has been made, wherein the upper setting tool portion further comprises a securing tab on an upper interior surface thereof, and
wherein the pivot ring further comprises an abutment insert for inhibiting movement of the securing tab beyond the abutment insert, the securing tab being constructed and arranged for placement within and selective slidable movement along the groove channel to achieve either a locked position when the securing tab is abutting the abutment insert and an unlocked position in the first chamber.

11. The undercut tool assembly as claimed in any preceding claim, wherein the seismic drill bit further comprises at least one wear indicator thereon.

12. The undercut tool assembly as claimed in any preceding claim, wherein the drill tip head further comprises a wear insert thereon.
